# EUROPEAN PATENT SPECIFICATION

(11) **EP 4 547 972 B1**
(45) Date of publication and mention of the grant of the patent: **31.12.2025**
(21) Application number: 23744236.3
(22) Date of filing: 29.06.2023
(51) Int. Cl.: F04D 25/04, F03D 3/00

(54) **VENTILATION DEVICE**
LÜFTUNGSVORRICHTUNG
DISPOSITIF DE VENTILATION

(30) Priority: 01.07.2022 GB 202209691
(43) Date of publication of application: 07.05.2025
(73) Proprietor: FLETTNER VENTILATOR LIMITED, Milton Keynes, Buckinghamshire MK14 6GD (GB)
(72) Inventor: BEWICK, Mark, Milton Keynes (GB)
(74) Representative: Williams, Ben
(86) International application number: PCT/IB2023/056729
(87) International publication number: WO 2024/003796

(56) References cited:
- WO-A1-2006/046337
- GB-A- 2 081 882
- US-A1- 2004 072 531
- US-A1- 2015 110 627
- US-B2- 8 905 704

## Description

### Field of the Invention

The invention relates to a wind powered (e.g. roof-mounted) device for ventilation and/or air circulation for vehicles (including road vehicles and boats), trailers, buildings e.g. portable buildings, containers, or any (relatively) flat roofed structure requiring ventilation and/or air circulation.

### Background

Wind powered roof ventilators for vehicles, containers and buildings are known.

USD471624 HURLSTONE is an example. US1773453 FLETTNER describes an early roof ventilator.

EP0045615 and GB2081882 both to FLEURY describe a vehicle or building ventilating system driven by moving air with rotor blades covered by a cover plate extending over the area defined between the rotor blades integral with the rotor blades. This has constructional and operational advantages in that it is possible to mould the rotor in a single moulding, and that it is less likely to catch on obstructions, such as the branches of trees, due to its relatively smooth contour. In common with other examples, the return rotor blade opposes the rotation. Typically, the return rotor blade is not adjustable.

The FLETTNER (RTM) 2000 is a wind powered roof ventilator available from Flettner Ventilator Limited, UK.

Roof ventilators are typically not powered nor do these generate power. Typically they have a high Q value (in other words these have low friction and are lightly damped).

Vertical axis wind mills are known. US1766765 SAVONIUS describes an early wind rotor comprising two oppositely curved vanes overlapping each other in the centre. KR2013008181A GYEONG and KR20130142264A KANG describe wind power generators (wind mills). These are required to drive a generator to generate power and are typically geared with relatively high torque gears to generate power. Wind turbines have blades that are typically mounted on gears. Heavy, geared wind turbine blades have a low Q value as these are relatively heavily damped, and are not suitable for use in roof ventilation. Wind turbine blades may be adjustable on the return stoke so they do not oppose (or oppose to a lesser extent) the rotation.

Wind powered roof ventilators may be used where ventilation is essential e.g. on buildings or roofs where ventilation is required to disperse the contents of the building or vehicle and draw in fresh air. It may therefore be important that these operate efficiently and effectively even at very low wind speeds. The lower the wind speed at which these can operate effectively, the more likely that adequate ventilation is provided. In other applications air circulation may be desired using such ventilation/air circulation devices.

Operation at very low wind speeds (e.g. below 10 miles per hour, or even below 5 miles per hour) is less important when a vehicle is moving but may be critical when a vehicle is parked or the ventilator(s) is (are) installed on a non-moving structure.

When addressing the challenge of operation at very low wind speeds, reliability of the ventilator device should preferably not be impacted. Furthermore no, or limited, additional cost should be introduced into the manufacturing process. It is preferable that a ventilator device that operates at desired very low wind speeds remains relatively easy and/or cost effective to manufacture, and/or with few or no additional parts and/or with few or no additional assembly requirements.

Indeed, whilst operation at low wind speeds (such as below 5 or 3 miles per hour) is a consideration, so is improved efficiency of operation at higher wind speeds. It is advantageous if any improvements provide both improved operation at low wind speeds and improved efficiency at higher wind speeds, so that extraction (or recirculation) of air is carried out more effectively.

The present invention seeks to alleviate one or more of the above problems and/or challenges or of the prior art.

### Statements of the Invention

In a first aspect of the invention there is provided a device for ventilation and/or air circulation comprising a rotor assembly:
the rotor assembly comprising: a fan (e.g. a centrifugal fan); and a rotor operatively connected (e.g. rigidly, optionally on the same shaft or spindle) to the fan and capable of being rotated by moving air to drive the fan to rotate; the rotor comprising a base plate and comprising at least two rotor blades, generally curved at least in part, and extending upwardly from base plate, preferably, in spaced overlapping relation with their concave, or partly concave, internal surfaces in opposition to define an air passage (e.g. S-shaped or sinusoidal or similar) between the rotor blades; and further wherein, a portion of the external surface of one or both rotor blades comprises a plurality of raised and/or recessed surface features (e.g. recessed dimples and/or raised protrusions, of predetermined shape and/or spacing), and at least some surface features lie immediately adjacent, and/or abut, and/or slightly intersect, one another.

Whilst only two rotor blades are typically described, three or more may be used. The rotor blades are typically arcuate to form a smooth curve, but may be formed from a series of flat panels joined together at an angle, for example at radiused or even sharp joints, to form a generally curved shape with several flat faces (somewhat prism like).

It is understood that the arrangement, and, in certain embodiments, the predetermined arrangement of abutting and/or adjacent and/or (slightly) intersecting or overlapping raised and/or recessed surface features (e.g. recessed dimples and/or raised protrusions, of predetermined size and/or shape and/or spacing and/or orientation) on at least part of the curved portion of the external surface of the rotor blades, increases boundary layer attachment and reduces pressure drag.

At least some (e.g. the majority, most or substantially all) surface features may each have a substantially continuous periphery (P). The peripheries (P) of at least some surface features may lie immediately adjacent, and/or abut, and/or slightly intersect, one another.

In this way a majority, over 70%, over 80%, over 90%, over 95% or substantially all of the external surface of the curved portion (or at least its leading part C) of one or both blades can be occupied by (relatively large) surface features. Relatively large surface features means that the width or height (or diameter when these are circular) are of a similar order of magnitude, for example, within one or two orders of magnitude of the height of a blade, preferably ½ to 1/50 of the height (H) of a blade, even more preferably 1/3 to 1/10 of the height (H) of a blade, even more preferably 1/3 to 1/6 of the height (H) of a blade, even more preferably 1/4 to 1/6 of the height (H) of a blade. In this way, a number of rows of adjacent e.g. close packed, surface features can be provided across the blade from its lower edge to its upper edge. Preferably, 3 to 10 rows are provided, more preferably, 4 to 6 rows are provided, even more preferably, 5 rows are provided.

The cross section of the periphery (P) of at least some surface features may be radiused (e.g. to provide a smooth transition from the main surface of the blade to the surface of the surface features) and any overlap between peripheries (P) may not extend, or may not extend to any significant extent, beyond the radiused peripheries of the overlapping surface features. Thus, preferably no part or discontinuous surface features are provided.

The majority, most or almost all or substantially all surface features may be whole or complete e.g. having a continuous periphery, such as a complete circumference when these are circular, without any significant discontinuities or changes of direction present in the periphery and/or with no part or half surface features present. Small overlaps may be provided about and between the peripheries, e.g. the radiused peripheries, to accommodate the desired close placement of (relatively large) surface features on (e.g. the truncated cone shape due to a draft angle α, where present) of a curved portion of a blade. Nevertheless, it is preferred that no truncated or part surface features are provided, except for these small overlaps. This reduces the potential for discontinuities on the blade that may increase friction on the return stroke of the blade.

The surface features may be arranged in adjacent rows. For example a whole number of rows may be provided. The surface features may be close packed together (e.g. square close packing or more preferably hexagonal close packing). The size e.g. width and/or length, and/or diameter where these are circular, of the surface features may be chosen to provide a predetermined number of close packed rows of surface features between the lower and upper edges of one or both blades. Where an odd number of rows are provided the number of surface features at the trailing edge can be one or three or five and so on.

One or both or all rotor blades may comprise a flatter portion terminating at a front edge (e.g. that leads the rotation of the blade) and a curved portion terminating at a trailing edge (e.g. that trails the rotation of the blade) and in which the surface features extend over (e.g. occupy) at least part of the external surface of the curved portion (of one or both blades.

The surface features may extend from a lower (e.g. a lowermost) corner of the external surface of the curved portion to an upper (e.g. uppermost) corner of the external surface of the curved portion of one or both blades, preferably over at least a part (e.g. the leading part C) of the curved portion of the external surface of a respective blade.

The size and/or shape and/or arrangement pattern of the surface features may be chosen to provide a whole number of complete surface features about the external curved surface (in a horizontal direction) and/or along the curved surface (in an upstanding e.g. vertical or near vertical within a small angle e.g. a draft angle α, direction) e.g. so that a substantial part (e.g. more than 70%, more than 80%, more than 90%, more than 95% or substantially all the entire curved portion (or its leading part C) of the external surface of blade is provided with whole (not discontinuous) surface features.

The surface features may extend over (e.g. occupy) a substantial part (or at least a leading part C) of a curved portion of the external surface of one or both blades (e.g. more than 70%, more than 80%, more than 90%, more than 95%, substantially all of the available curved portion or a leading part C of curved portion the external surface).

At least one surface feature may lie adjacent to the trailing edge of one or both blades. A plurality of surface features may lie adjacent to the trailing edge of one or both blades.

The surface features may be of the same (or very similar) size (e.g. width, and depth or height) and configuration (e.g. shape and/or orientation). Preferably the surface features are substantially identical to one another. In one or more embodiments, the surface features may vary in size and/or vary in shape from one to the next. For example, they may all be the same shape (say circular, elliptical or teardrop shaped) and have differing lateral extent (e.g. length or width) such as diameters for circular shaped dimples (recessed surface features) or bumps (raised surface features).

The blades may be provided with a cover plate that extends only over the area defined between the rotor blades. One or both rotor blades (e.g. the walls of one or both rotor blades) may have an (e.g. small draft) angle (e.g. to facilitate manufacturing). This small draft angle and curved surface of the rotor blades complicates the provision of adjacent (immediately next to with very small or virtually no gap or with a slight overlap or intersection) of similarly sized surface features over the impactful external convex curved external surfaces (at least leading part C and preferably the entire curved portion of the blades). In one or more embodiments, the present invention addresses this challenge. In one or more embodiments, the angle of one or more blades with respect to the horizontal, or vertical, may be more significant e.g. up to 45 degrees, or no angle may be provided.

The surface features may be recessed e.g. dimples (or raised e.g. bumps). The surface features may be generally or substantially circular, or oval or elliptical or obround (stadium-shaped) or hexagonal, octagonal e.g. when seen in plan view. They may be symmetric or indeed asymmetric. Other examples of possible shapes may include teardrop shapes.

The surface features such as sets of dimples or raised features such as bumps or both on the outer curved surface of the rotor blades create less drag in the return direction. This is because the surface boundary layer is retained about the curved surface for longer and the separation point of the boundary layer from the surface is further back along the surface, reducing the size of the wake and so the drag.

The fan may comprise at least one vane mounted below the base plate for deflecting air through the fan. The device may comprise a rotor assembly base e.g. on which the rotor assembly rotates. In the device, the fan and rotor may rotate about the same axis and may be mounted coaxially e.g. on the same shaft (or rotating spindle). Where a shaft is provided this is typically rigidly mounted on a rotor assembly base which is fixedly attached to a roof. The shaft is typically vertical (or close to vertical) in use.

The device may comprise a clamping element (e.g. a clamping plate), for attaching the rotor assembly base to a mounting surface (e.g. a roof, e.g. from below the mounting surface or above the mounting surface). Typically a flat roof is required, but small deviations from flatness e.g. in surface undulations or variations may be permitted and adapted for e.g. by using various gaskets. It is also preferred that the roof is generally horizontal during use (so that the shaft is generally vertical), but small deviations can be accommodated with little difficulty.

The rotor and fan, may be rigidly attached to one another and indeed this is preferred in such a low torque, high Q device. However, one or more gears may be used to operatively connect the fan to the rotor. The fan and the rotor may be made from plastics material. A closable shutter element may be mounted below the centrifugal fan to control the amount of air drawn into the fan.

Several embodiments of the invention are described and any one or more features of any one or more embodiments may be used in any one or more aspects of the invention as described above.

### Brief Description of the Invention

The present invention will now be described, by way of example embodiments only, with reference to the following figures. In the figures, like reference numerals refer to like features.
Figure 1 shows an exploded perspective view of a rotor assembly for use in a ventilation device of the invention.
Figure 2 shows a side elevation, partially cutaway view of a ventilation device of the invention mounted on a roof, ready for operation.
Figure 3 shows an exploded side elevation view of an upper rotor assembly (here an upper part of the rotor assembly of Figure 1).
Figure 4 shows a side elevation cross section view of the upper rotor assembly of Figure 3.
Figure 5 shows a plan view from below of the rotor base plate, seen in Figures 1 to 4.
Figure 6 is a perspective view from above of the rotor, seen in Figures 1 to 4.
Figure 7 is a perspective view from above of an upper rotor assembly similar to that seen in Figures 1 to 4 here with dimples up to the trailing edge of the upstanding rotor blade (scoop) wall.
Figures 8A and 8B show, respectively, a side elevation view and a close up of selected (here highlighted) dimples, in a rotor, illustrating selected (here highlighted) radiused peripheries (e.g. circumferences) of selected (e.g. circular) dimples.
Figures 8C and 8D show plan views of dimples in a rotor illustrating, respectively, the geometry of the dimples without the radiused peripheries highlighted and the same geometry now with the radiused peripheries highlighted.
Figures 9A and 9B show, respectively, side elevation views of an upper rotor assembly and a rotor, with differing arrangements of dimples, in this example near the leading and trailing edges of their respective upstanding rotor blade (scoop) wall.
Figures 10A and 10B show cross sectional views along sections AA' and BB', respectively, of the rotor scoops seen in Figures 9A and 9B.

### Detailed Description of the Invention

It will be understood by those skilled in the art that any dimensions and relative orientations or arrangements such as lower and higher, above and below, planar, undulating and flat, and any directions, such as vertical, horizontal, upper, lower, axial, radial, longitudinal, tangential, upstanding etc., referred to in this application are within expected structural tolerances and limits for the technical field and the apparatus and methods described, and these should be interpreted with this in mind.

In this document, especially in the following description, the terms ventilator and ventilator/ventilation device are used to refer to a device for ventilation and/or air circulation, unless the context requires otherwise.

Wind powered ventilators are versatile and suitable for use in a range of applications. The principle is as follows. An extractor fan is mounted on a spindle, the extractor fan is driven by an air scoop (usually with two co-operating rotor blades), typically mounted on the same spindle, which catches the air stream created by the motion of a vehicle, or the prevailing breeze. Below the spinning air scoop are vanes of the extractor fan which expel air, drawing stale air from below. The construction of the unit typically prevents the entry of rain, dust and downdrafts. Extraction capacity is effective and can be regulated by adjusting an internal shutter (e.g. within the vehicle or building). Wind power means a quiet, maintenance-free performance with no electrical connections, no battery drain, no running costs and no motor noise.

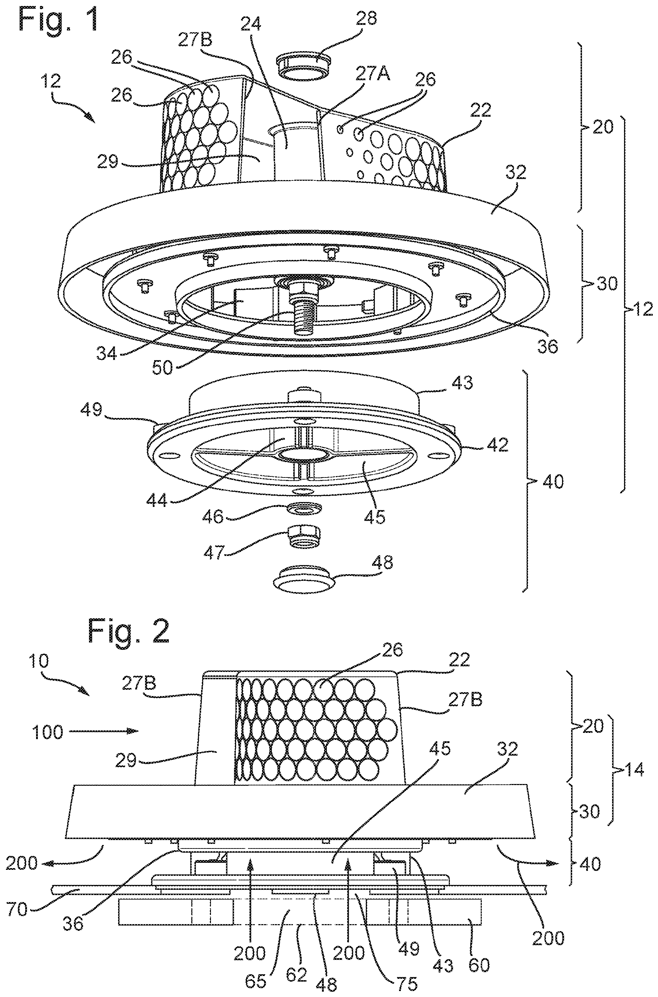

Figure 1 shows a rotor assembly 12 for use in a ventilation device 10, seen in Figure 2. Rotor assembly 12 comprises a rotor 20 and a fan 30 which may be a centrifugal fan. The rotor assembly 12 has an upper portion (rotor 20 and fan 30) rotatably mounted on a rotor assembly base 40 by a shaft 50, here in the form of a fixed shaft, about which rotor assembly 12 rotates. Rotor assembly base 40 may be mounted on a flat roof 70 of a vehicle, building, boat or container etc. and clamped into place by a clamping plate 60. Here, clamping plate 60 is located beneath roof 70 and provides, via an, optionally closable, internal ventilation grill 62 and an air passageway 65, access to a hole 75 in roof 70. Hole 75 provides an air passageway leading to inlet air passageway 45 in rotor assembly base 40 leading to inlet hole 135 in fan 30.

Rotor 20 comprises an air scoop 22 formed of first rotor blade 22A and second rotor blade 22B. Rotor blades 22A, 22B extend upwardly from rotor base plate 32. The upstanding walls of blades 22A and 22B are partially curved and in spaced overlapping relation with their concave internal surface 23 opposing one another to define an air passage which may be S-shaped or sinusoidal or similar between the rotor blades 22A, 22B. This arrangement provides a Savonius-type wind rotor. Other types of rotor and rotor blade arrangements may be contemplated.

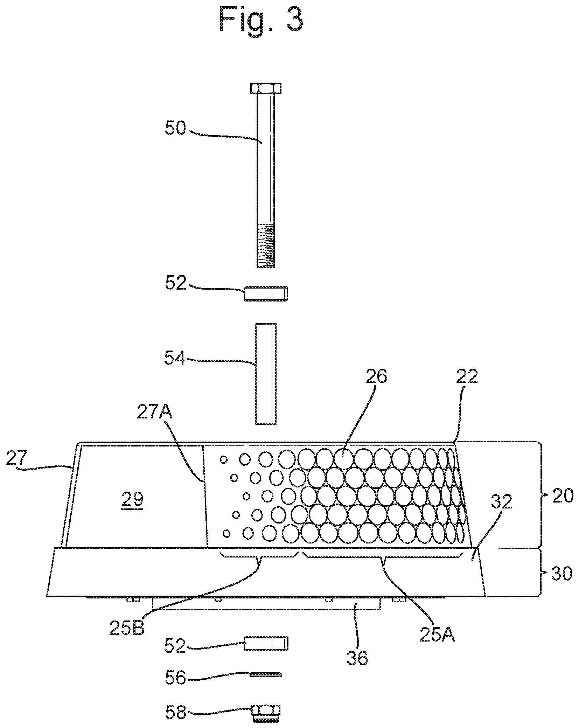

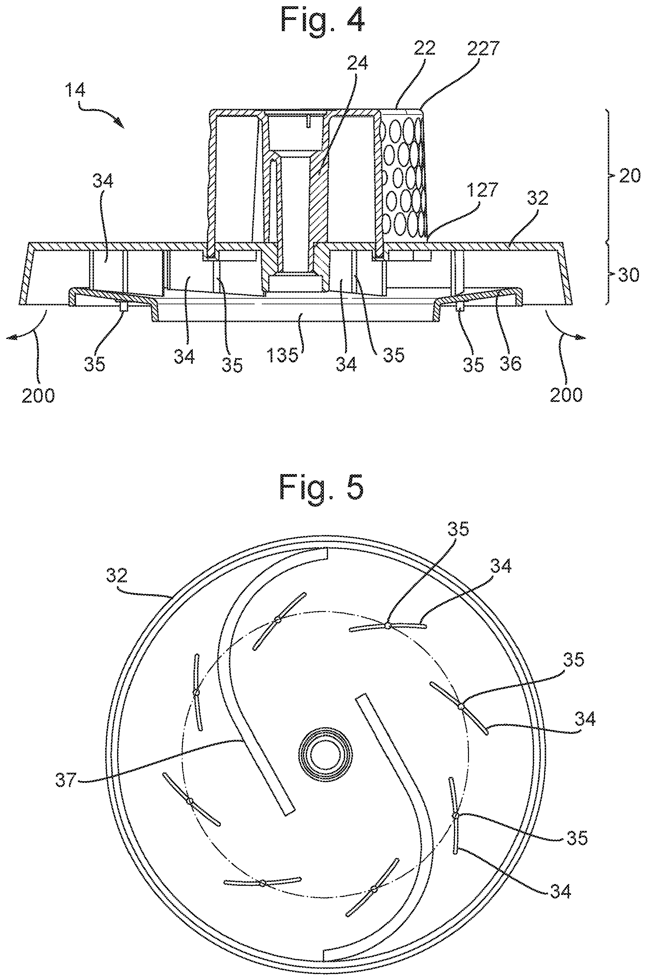

A central column 24 in air scoop 22 receives shaft 50 and, as can be seen in Figures 3 and 4, upper and lower bearings 52, and a bearing spacer 54. A washer 56 and a locking nut 58, which may be a polymer insert lock nut, are provided to hold shaft 50 in place within central column 24. A cap 28 may be provided to close off the access to shaft 50 and neatly finish off the cover plate of air scoop 22. In this embodiment, and indeed preferably, the cover plate (not labelled) extends only over the area defined between the rotor blades 22A, 22B.

In some embodiments, each rotor blade 22A, 22B has a flatter portion 25A leading from a front upstanding edge 27A towards a curved portion 25A which terminates in a trailing edge 27B. In other embodiments no flatter portion is provided. The spaced overlapping relation of the curved blades 22A, 22B facilitates a gap providing an air inlet 29 at one end of air scoop 22 which catches the air, even slight breezes.

Rotor base plate 32 forms a top plate for fan 30 below which several fan vanes 34 extend on mounting pins 35 (see Figures 4 and 5). The fan vanes 34 are at a small angle e.g. of 30-45° from a tangent to a circle on which the centrally-located mounting pins 35 of vanes 34 are located (see Figures 4 and 5 and, in particular, the dotted line in Figure 5). Fan vanes 34 provide a change in direction for air received via air passageway 45 within rotor assembly 12, expelling air outward between downwardly depending outer walls of rotor base plate 32 and a rotor shroud 36 situated centrally and coaxially below rotor base plate 32. Shroud 36 may be mounted on mounting pins 35 and may be shaped to accommodate vanes 34 of differing and/or of varying height(s). Shroud 36 has a central inlet opening 135 to receive air from rotor assembly base 40.

Rotor assembly base 40 comprises a main body 42 at its lower end, upwardly depending from which a wall 43 defines central air passageway 45. A central column 44 in base 40 receives shaft 50, in this example embodiment in a non-rotating manner, by means of a washer 46 and locking nut 47 which may be a polymer-insert lock nut. The rotor assembly base 40 may be provided with a cap 48 to close off central column 44. Thus, the rotor assembly 12 may be shipped as a single component ready for installation by an end user. A gasket may be provided for providing a weather proof seal for the base to the roof.

As can be seen in Figure 5, indents or holes or bosses 37, of corresponding, here partially curved, partially straight configuration, may be provided in base plate 32 for receipt of the lower terminal edges of rotor blades 22A and 22B.

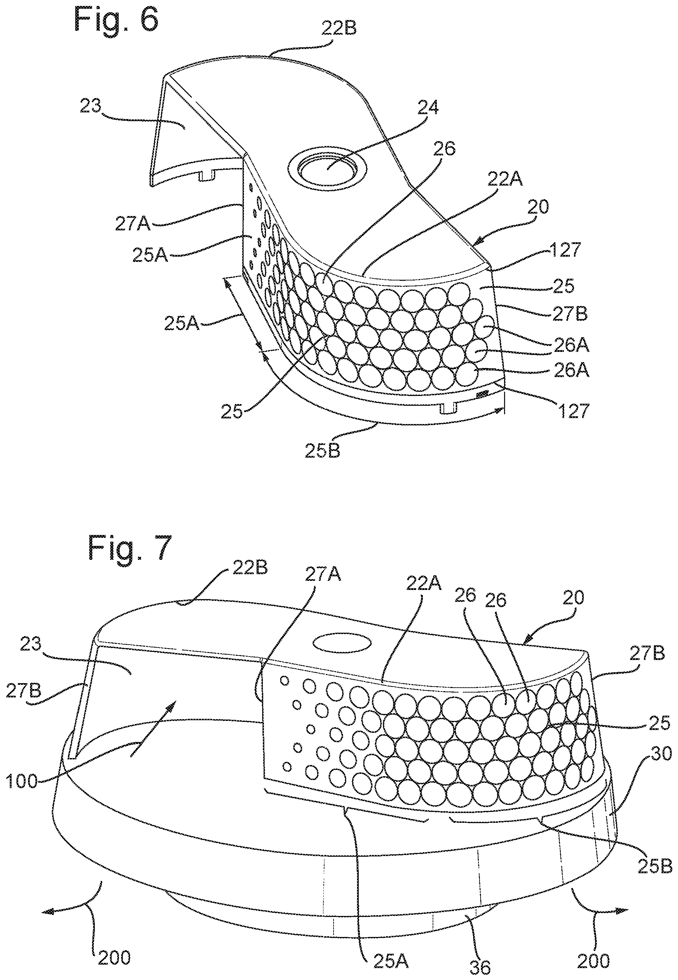

Turning now to Figure 6, a close-up of a rotor 20 is shown illustrating the overlapping spaced-apart relation between blades 22A and 22B. Typically, blades 22A and 22B are identical but these need not be. Nevertheless, identical blades facilitate even rotation of rotor 20. The following description therefore applies to both blades.

Blade 22A in preferred example embodiments comprises a first generally flat (flatter) portion 25A extending from a leading edge 27A towards a curved portion 25B of blade 22A.

A smooth transition is provided between flatter portion 25A and curved portion 25B. At a lower edge of blade 22A, mounting features and tabs are provided for locating in (here) holes 37 in rotor base plate 32. Once mounted in place on rotor base plate 32, the exposed lowermost corner or edge of blade 22 is seen as a line 127 and an upper corner of blade 22A is seen at 227, between which, and extending between leading edge 27A and trailing edge 27B, lies the exposed external surface 25 of blade 22A.

Exposed external surface 25 of blade 22A is provided with a plurality of surface features in the form of dimples 26. Alternative surface features may be used (as an alternative and/or in addition) such as raised projections and/or surface undulations on surface 25. Nevertheless, individual discrete surface features recessed into the exposed external surface 25 of blade 22 are preferred.

The surface features may (in plan view from above) be curved, oval, elliptical, or other (e.g. smoothly varying shapes) and are preferably circular. In some embodiments (not shown) these may be polygonal with sides of the same length e.g. hexagonal, octagonal and so on. Surprisingly, and as shown in Figures 6, 7, 8, 9 and 10, it is preferred that the surface features e.g. dimples 26 are close-packed with little, if not minimal, space between the surface features e.g. dimples 26. How this is achieved on the complex curved shape of blade 22, which in practice is, over at least part of its surface, a truncated cone, is explained below. The following description will use dimples as an example of surface features.

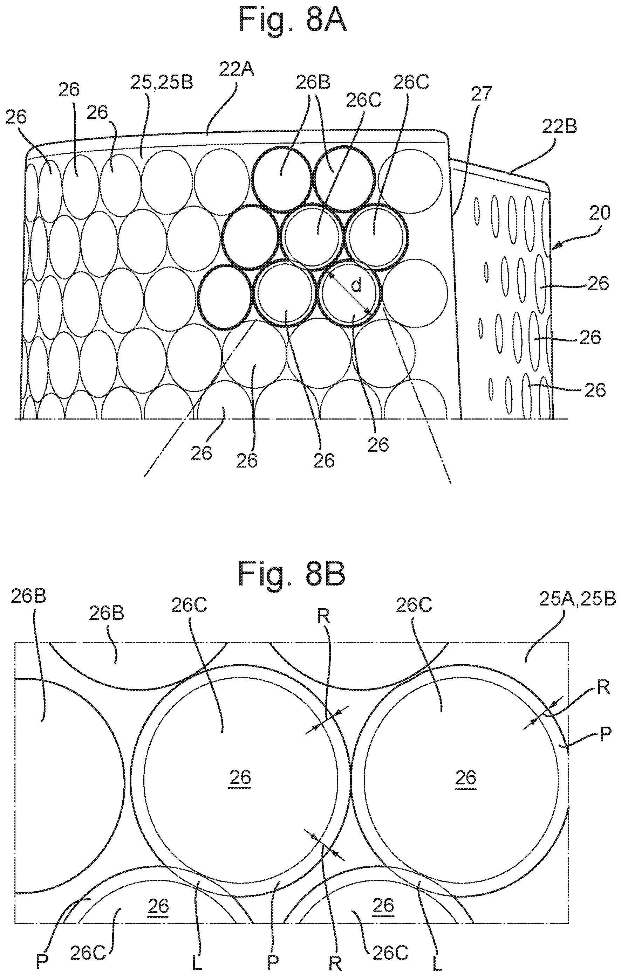

Typically, dimples 26 are provided across almost the entirety of the curved portion 25B of blade 22. The gaps between dimples are small and, in effect, these lie immediately adjacent one another. Typically, these abut, or occasionally intersect (e.g. overlap), one another slightly. This close nature of the packing of one dimple to the next is not immediately visible in Figure 7 due to the shading but can be seen in more detail in Figures 8A and 8B and will be described further below.

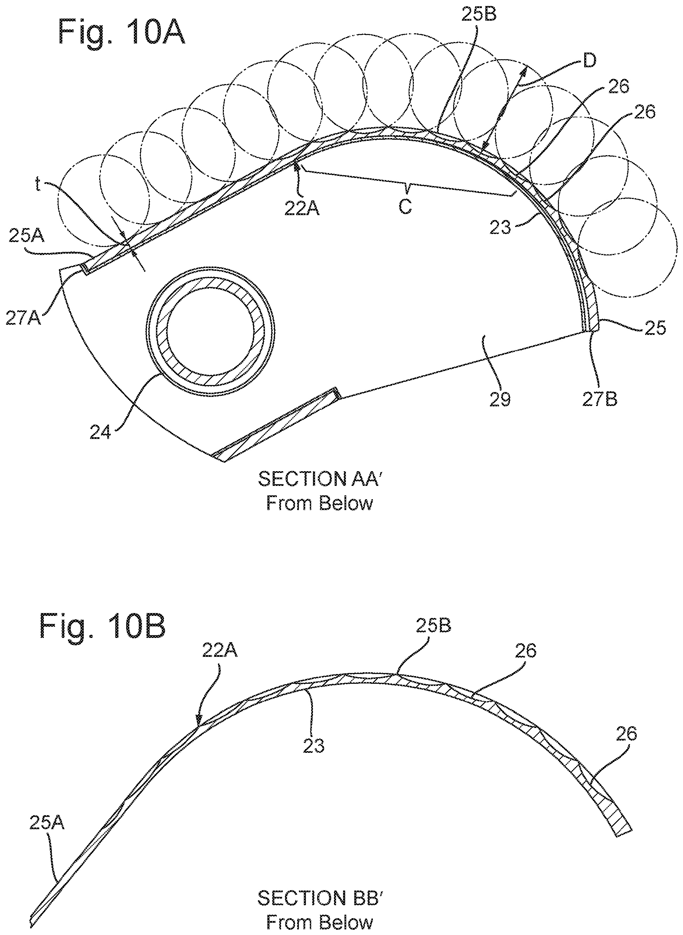

The final row of dimples adjacent to trailing edge 27B, as shown in Figure 6, may form a specific shape such as an arrow head seen at 26A in Figure 6 or, indeed, a receding arrow tail shape (not shown). The dimples 26 are preferably of substantially the same size and/or shape and/or of substantially the same depth over at least a leading portion C (see Figure 10A). This is the most impactful area on the return stoke.

There may be slight depth variation from one to the next to accommodate the curvature of curved surface 25B, as can be seen in Figure 10A, where the diameters of spheres representing the shape of each recessed dimple can be seen, and further can be seen to vary ever so slightly from one another about the surface. Typically, the diameters increase slightly from the flatter section 25A to the curved section 25B. Preferably the diameters 'd' of the dimples 26 and the diameters 'D' of the spheres, of which these form part, are the same over the entire curved section 25B, or at least over the leading portion 'C'. In some embodiments, the depth of dimples 26 decreases towards the trailing edge 27B.

It can also be seen in Figure 10A that the depth of the dimples may vary (here reducing) towards leading edge 27A and, to a lesser extent, towards trailing edge 27B. This assists with providing a less discontinuous transition from external surface 25 where dimples are present to external surface 25 where dimples are not present.

It is the provision of surface features such as closely-packed dimples about curved portion 25B, or at least over the leading portion 'C', of blade 22 which are most impactful in reducing drag on the return stroke. Turning back to Figures 6 and 7, the flatter portion 25A of blade 22 has varyingly spaced, varyingly sized dimples which fade away. Whilst this is aesthetically pleasing, it also assists with removal of injection moulded blade parts from an injection mould.

Typically, the diameters d of dimples (seem in plan view) will vary slightly depending upon both the diameter D of the sphere which forms it (see Figure 10A) and the depth at which it is formed within thickness t of the blade rotor. The choice of diameters d of the actual dimples 26 (seen in plan view) is selected to provide a whole number of dimples between bottom edge 127 and top edge 227. The dimples 26 (and the respective (virtual) spheres of which they form part) are sized to provide a whole number of rows when arranged with close packing between rows, preferably hexagonal close packing.

Referring now to Figures 8A and 8B, various dimples 26 are shown and a few, 26B and 26C, are highlighted. Each of the dimples provide a part-spherical, recessed shape with a continuous periphery P (which may be radiused as shown for dimples 26C); this is not shown for dimples 26B. The periphery P may be radiused as shown here to provide a smooth transition from the spherical shape of the recessed dimple to the outermost external surface 25 of blade 22. Tiny overlaps (or fillets) L can be seen where the radiused periphery of one dimple 26C overlaps slightly with the radiused periphery of another dimple 26C. It is preferred that the overlap L from one dimple to the next does not extend beyond the radiused periphery P of the next dimple. Nevertheless, in an alternative embodiment, it can be envisaged that an undulating surface of continuous surface features providing dimples (much like a smoothly varying egg box type shape) may be provided to similar effect to the closely-packed dimples provided in preferred embodiments of the present invention. Where such undulating external surface features are provided, it is preferred that the undulations are also closely-packed together.

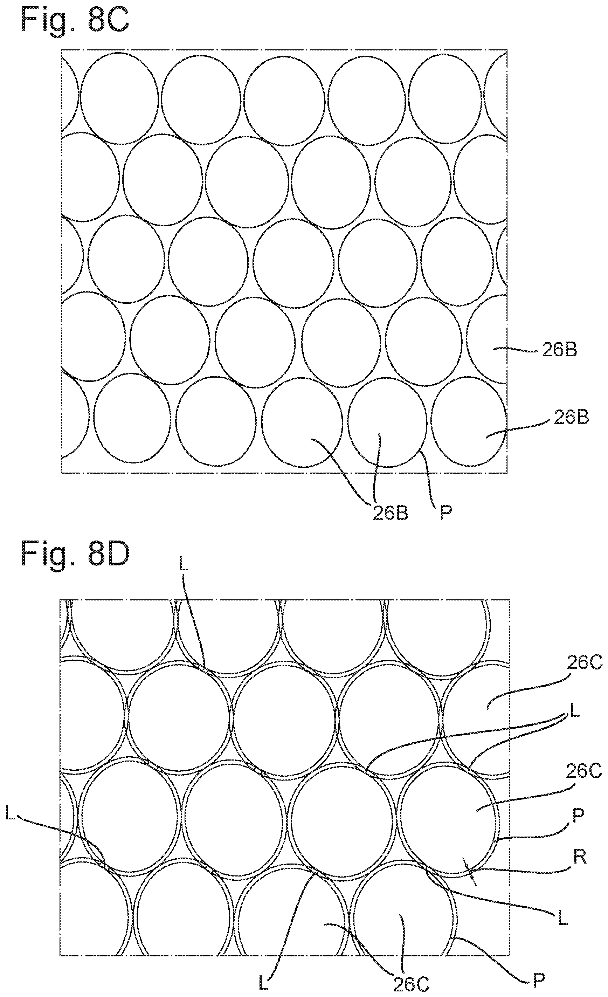

Figures 8C and 8D show that, preferably, there are some slightly overlapping dimples in the design, which intersect at overlaps L due to the radiuses of width R applied to peripheries P. The preferred geometry is with radiuses R applied around the peripheries P of all dimples. Figures 8C and 8D help see how tightly the dimples are packed even pre radiuses being applied in CAD drawings. Some slight gaps between un radiused dimples can be seen. Typically these are reduced to small or near zero or even small overlaps L when the radiuses of width R are provided about the peripheries of the dimples.

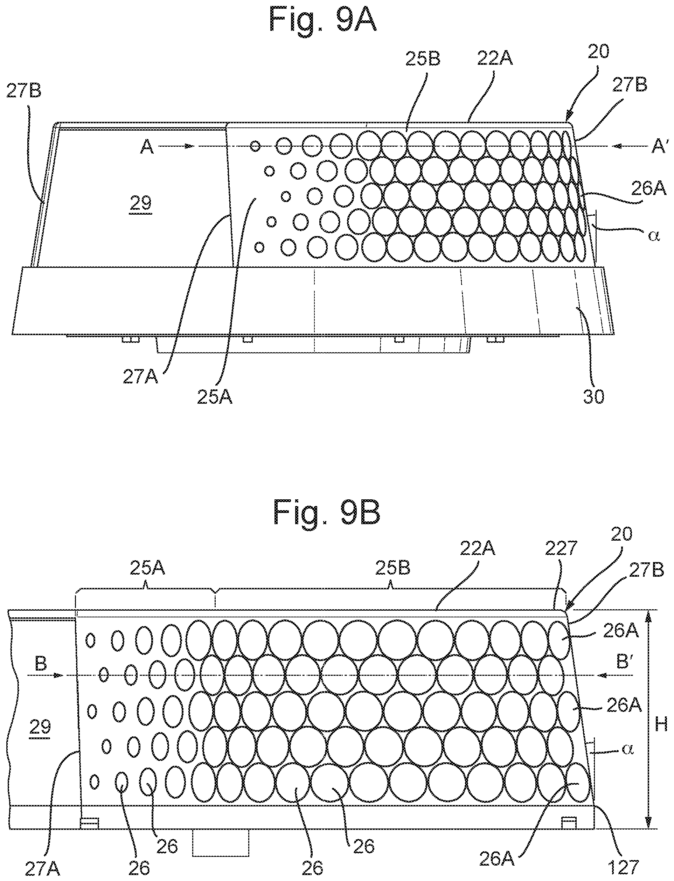

Referring now to Figures 9A and 9B, Figure 9A shows the edge of the dimple pattern provided adjacent trailing edge 27B of blade 22 with one whole surface feature, here dimple 26A. In contrast, Figure 9B shows three whole dimples 26A in alternate rows lying adjacent to trailing edge 27B of blade 22A.

A whole number of rows are provided between lower edge 127 and upper edge 227 of the exposed surface 25 of blade 22A. Five has been found to be a good number but fewer or more whole rows of surface features, such as dimples 26, may be provided. Preferably at least three or four and up to seven, eight, nine or ten rows may be provided, but as few as two or as many as fifty rows may be provided.

Referring now to Figures 10A and 10B, these show cross-sections taken from Figures 9A and 9B respectively. As can be seen, the depth of the features into the wall of blade 22A is typically a half or less than the thickness t of the upstanding wall of blade 22A.

As can be seen in Figures 9A and 9B a small draft angle α is provided to ease extraction of rotor part 22 comprising blades 22A and 22B from an injection moulding tool. Indeed, in some embodiments, the dimples are formed using a special tool which assist in forming the dimples. A draft angle may then not be used.

Where provided, this small angle, typically around 10-15°, complicates somewhat the provision of abutting or immediately adjacent surface features, particularly when these are circular. This has been addressed with minimal loss in performance and, indeed, in some embodiments with enhanced performance, by facilitating small overlaps L of radius peripheries P for selected dimples (e.g. dimples 26C). Thus, abutting or slightly overlapping surface features, e.g. close packed, can be maintained despite the part truncated cone shape of external surface 25 of blades 22A, 22B. In some embodiments a larger angle, up to 45 degrees may be provided again complicating the desired formation of the raised and/or recessed surface features.

In use, air flow 100 enters air inlet 29 to drive rotor air scoop 22. Air inlet 29 receives driving air which causes blades 22 to rotate causing rotor base plate 32 and so fan 30 to rotate. Air 200 is drawn in via air inlet 65 and air passageway 45 in wall 43 into air passageway 135 in the base of shroud 36 towards fan vanes 34 before being expelled outwards between the downwardly-depending walls of rotor base plate 32 and shroud 36. Air 200 may be expelled e.g. outside vehicle or container or building, or may be recirculated within the building, in which case additional re-entry holes may need to be provided within roof 70 in the example shown, although these may be dispensed with if the fan is located beneath the roof 70. Where air extraction for ventilation is required, typically the building or container or vehicle has an inlet grill provided elsewhere to allow air to enter it before being extracted.

The ventilator device 10 is capable of catching even the lightest breeze such that, when stationary e.g. on a stationary vehicle or on a building, the rotor 20 and, indeed, rotor assembly 12 can rotate without electrical power. Nevertheless, on the return stroke the external surface 25 of blade 22 opposes the oncoming wind direction and the wind, or light breeze, has to pass over it. The ease with which blade 22 can return against the wind is increased when surface features such as those described (e.g. dimples 26) are provided as these surface features help retain the boundary layer against the returning blade external surface (particularly against leading portion C and indeed against curved portion 25B) for longer on the return stroke, before separating from the external surface 25 and creating a wake.

In particular preferred embodiments, by providing a limited number of whole discrete surface features with few discontinuities and/or by providing whole discrete surface features (e.g. about most or substantially all the curved surface 25) close together, for example abutting one another e.g. in close-packed formation, such as square or hexagonal close-packed, oncoming air passes more smoothly over the curved surface 25B before creating a wake at the trailing edge 27B.

Variations will be apparent from the information disclosed herein.

The inventors have appreciated that constructional changes may have a helpful impact on low torque high Q wind powered ventilators to address the challenge of operation at very low wind speeds (e.g. below 10 miles per hour, and particularly below 5 or even 3 miles per hour). This is less important when a vehicle is moving but can be critical when a vehicle is parked or the ventilator is installed on a non-moving structure. Indeed such constructional changes are also thought to improve efficiencies at higher wind speeds, with very little additional cost in manufacture.
10 ventilation device
12 rotor assembly
14 upper rotor assembly (comprising rotor 20 and fan 30)
20 rotor
22 air scoop
22A first rotor blade, 22B second rotor blade
23 internal surface
24 rotor central column
25 external surface
25A flatter portion of blade
25B curved portion of blade
26, dimple
26A dimple(s) near (e.g. closest) to leading edge
26B highlighted dimple
26C highlighted dimple with highlighted fillet (radius) about circumference
27A leading edge
27B training edge
127 lower (e.g. lowermost) exposed edge of blade
227 upper (e.g. uppermost) exposed edge of blade
28 cap
29 driving air inlet
30 fan (e.g. centrifugal fan)
32 rotor base plate
34 fan vane
35 fan vane mounting pin
135 air passageway (hole)
36 shroud
37 indent(s) or hole(s) or boss(es) for receipt of rotor 20
40 rotor assembly base
42 base main body
43 wall
44 base central column
45 air passageway(s) in rotor
46 washer
47 locking nut e.g. polymer-insert lock nut
48 cap
49 top locking nut e.g. polymer-insert lock nut
50 shaft e.g. in form of hex head nut or spindle
52 bearing
54 bearing spacer
56 washer
58 locking nut e.g. polymer-insert lock nut
60 clamping plate
62 internal ventilation grill (optionally closable)
65 air passageway(s) through clamping plate)
70 roof (e.g. of vehicle, building, boat, container etc)
75 air passageway(s) e.g. hole in roof
100 air flow driving rotor
200 extraction (or recirculation) air flow via fan
α - (alpha) draft angle
R - radius
P - periphery
L - overlap
t - thickness
d - diameter of dimple in plan view
D - diameter of virtual sphere of which dimple forms part
H - height of blade
C - leading section of curved portion 25B of blade 22A, 22B

## Claims

1. A device (10) for ventilation and/or air circulation comprising a rotor assembly: the rotor assembly (12) comprising:
- a fan (30); and
- a rotor (20) operatively connected to the fan and capable of being rotated by moving air to drive the fan (30) to rotate;
- the rotor (20) comprising a base plate (32) and comprising at least two rotor blades (22A, 22B) generally curved, at least in part, and extending upwardly from the base plate (32) in spaced overlapping relation with their concave, or partly concave, internal surfaces (23) in opposition to define an air passage between the rotor blades (22A, 22B);
**characterised in that**
- a portion of the external surface (25, 25A, 25B) of one or both rotor blades comprises a plurality of raised and/or recessed surface features (26),
wherein at least some surface features (26) lie immediately adjacent, and/or abut, and/or slightly intersect, one another.

2. A device (10) according to claim 1 in which at least some surface features (26) each have a substantially continuous periphery (P).

3. A device (10) according to claim 2 in which the peripheries (P) of at least some surface features (26) lie immediately adjacent, and/or abut, and/or slightly intersect, one another

4. A device (10) according to claim 3 in which the cross section of the periphery (P) of at least some surface features (26) are radiused and any overlap between peripheries (P) does not extend, or does not extend to any significant extent, beyond the radiused peripheries of the overlapping surface features (26).

5. A device (10) according to any preceding claim in which at least some surface features (26) are arranged in adjacent rows.

6. A device (10) according to any preceding claim in which the surface features (26) are arranged in a square close packing or hexagonal close packing arrangement.

7. A device (10) according to any preceding claim in which one or both rotor blades comprise a flatter portion (25A) terminating at a front edge (27A) and a curved portion (25B) terminating at a trailing edge (27B) and in which the surface features (26) extend over at least part of the curved portion (C, 25B) of the external surface of one or both blades (22A, 22B).

8. A device (10) according to any preceding claim, in which the surface features (26) extend from a lower corner (127) to an upper corner (227) of the curved portion (C, 25B) of the external surface of one or both blades (22A, 22B).

9. A device (10) according to any preceding claim in which at least one surface feature (26) lies adjacent to the trailing edge (27B) of one or both blades (22A, 22B).

10. A device (10) according to any preceding claim in which a plurality of surface features (26) lies adjacent to the trailing edge (27B) of one or both blades (22A, 22B).

11. A device (10) according to any preceding claim in which one or both rotor blades, has, or have, a draft angle.

12. A device (10) according to any preceding claim in which the surface features are recessed dimples.

13. A device (10) according to any preceding claim in which the surface features are of the same, or very similar, size and/or configuration.

14. A device (10) according to any preceding claim in which at least some of the surface features are substantially circular or oval or elliptical or obround or hexagonal or octagonal.

## Patentansprüche

1. Vorrichtung (10) zur Lüftung und/oder Luftzirkulation, umfassend eine Rotoranordnung:
wobei die Rotoranordnung (12) Folgendes umfasst:
- einen Lüfter (30); und
- einen Rotor (20), der mit dem Lüfter wirkverbunden ist und in der Lage ist, gedreht zu werden, indem Luft bewegt wird, um den Lüfter (30) anzutreiben, damit er sich dreht;
- wobei der Rotor (20) eine Grundplatte (32) umfasst und mindestens zwei Rotorblätter (22A, 22B) umfasst, die im Allgemeinen, mindestens teilweise, gekrümmt sind und sich von der Grundplatte (32) in beabstandeter überlappender Beziehung mit ihren konkaven, oder teilweise konkaven, Innenflächen (23) gegenüberliegend nach oben erstrecken, um einen Luftdurchgang zwischen den Rotorblättern (22A, 22B) zu definieren;
**dadurch gekennzeichnet, dass**
- ein Abschnitt der Außenfläche (25, 25A, 25B) eines oder beider Rotorblätter eine Vielzahl von erhabenen und/oder ausgesparten Oberflächenmerkmalen (26) umfasst,
wobei mindestens einige Oberflächenmerkmale (26) unmittelbar nebeneinander liegen und/oder aneinander anliegen und/oder sich leicht überschneiden.

2. Vorrichtung (10) nach Anspruch 1, wobei mindestens einige Oberflächenmerkmale (26) jeweils eine im Wesentlichen kontinuierliche Peripherie (P) aufweisen.

3. Vorrichtung (10) nach Anspruch 2, wobei die Peripherien (P) mindestens einiger Oberflächenmerkmale (26) unmittelbar nebeneinander liegen und/oder aneinander anliegen und/oder sich leicht überschneiden.

4. Vorrichtung (10) nach Anspruch 3, wobei der Querschnitt der Peripherie (P) mindestens einiger Oberflächenmerkmale (26) mit einem Radius versehen ist und jegliche Überlappung zwischen Peripherien (P) sich nicht oder nicht in signifikantem Ausmaß über die mit einem Radius versehenen Peripherien der überlappenden Oberflächenmerkmale (26) hinaus erstreckt.

5. Vorrichtung (10) nach einem vorhergehenden Anspruch, wobei mindestens einige Oberflächenmerkmale (26) in nebeneinander liegenden Reihen angeordnet sind.

6. Vorrichtung (10) nach einem vorhergehenden Anspruch, wobei die Oberflächenmerkmale (26) in einer quadratischen dichten Packung oder sechseckigen dichten Packungsanordnung angeordnet sind.

7. Vorrichtung (10) nach einem vorhergehenden Anspruch, wobei eines oder beide Rotorblätter einen flacheren Abschnitt (25A), der an einer Vorderkante (27A) endet, und einen gekrümmten Abschnitt (25B), der an einer Hinterkante (27B) endet, umfassen und wobei sich die Oberflächenmerkmale (26) über mindestens einen Teil des gekrümmten Abschnitts (C, 25B) der Außenfläche eines oder beider Blätter (22A, 22B) erstrecken.

8. Vorrichtung (10) nach einem vorhergehenden Anspruch, wobei sich die Oberflächenmerkmale (26) von einer unteren Ecke (127) zu einer oberen Ecke (227) des gekrümmten Abschnitts (C, 25B) der Außenfläche einer oder beider Blätter (22A, 22B) erstrecken.

9. Vorrichtung (10) nach einem vorhergehenden Anspruch, wobei mindestens ein Oberflächenmerkmal (26) neben der Hinterkante (27B) eines oder beider Blätter (22A, 22B) liegt.

10. Vorrichtung (10) nach einem vorhergehenden Anspruch, wobei eine Vielzahl von Oberflächenmerkmalen (26) neben der Hinterkante (27B) eines oder beider Blätter (22A, 22B) liegt.

11. Vorrichtung (10) nach einem vorhergehenden Anspruch, wobei ein oder beide Rotorblätter einen Formschrägewinkel aufweist oder aufweisen.

12. Vorrichtung (10) nach einem vorhergehenden Anspruch, wobei die Oberflächenmerkmale ausgesparte Vertiefungen sind.

13. Vorrichtung (10) nach einem vorhergehenden Anspruch, wobei die Oberflächenmerkmale die gleiche oder eine sehr ähnliche Größe und/oder Konfiguration haben.

14. Vorrichtung (10) nach einem vorhergehenden Anspruch, wobei mindestens einige der Oberflächenmerkmale im Wesentlichen kreisförmig oder oval oder elliptisch oder länglich-rund oder sechseckig oder achteckig sind.

## Revendications

1. Dispositif (10) permettant la ventilation et/ou la circulation d'air comprenant un ensemble rotor :
l'ensemble rotor (12) comprenant :
- une soufflante (30) ; et
- un rotor (20) relié fonctionnellement à la soufflante et capable d'être mis en rotation par l'air en mouvement pour entraîner la rotation de la soufflante (30) ;
- le rotor (20) comprenant une plaque de base (32) et comprenant au moins deux pales de rotor (22A, 22B) généralement incurvées, au moins en partie, et s'étendant vers le haut à partir de la plaque de base (32) en relation de chevauchement espacée avec leurs surfaces internes concaves ou partiellement concaves (23) en opposition pour définir un passage d'air entre les pales de rotor (22A, 22B) ;
**caractérisé en ce que**
- une partie de la surface externe (25, 25A, 25B) de l'une ou des deux pales de rotor comprend une pluralité d'éléments de surface en relief et/ou en retrait (26),
dans lequel au moins certains éléments de surface (26) sont immédiatement adjacents, et/ou viennent en butée les uns contre les autres, et/ou se croisent légèrement.

2. Dispositif (10) selon la revendication 1, dans lequel au moins certains éléments de surface (26) possèdent chacun une périphérie sensiblement continue (P).

3. Dispositif (10) selon la revendication 2, dans lequel les périphéries (P) d'au moins certains éléments de surface (26) sont immédiatement adjacentes et/ou viennent en butée les unes contre les autres, et/ou se croisent légèrement.

4. Dispositif (10) selon la revendication 3, dans lequel la section transversale de la périphérie (P) d'au moins certains éléments de surface (26) est arrondie et tout chevauchement entre des périphéries (P) ne s'étend pas, ou ne s'étend pas de manière significative, au-delà des périphéries arrondies des éléments de surface se chevauchant (26).

5. Dispositif (10) selon une quelconque revendication précédente, dans lequel au moins certains éléments de surface (26) sont agencés en rangées adjacentes.

6. Dispositif (10) selon une quelconque revendication précédente, dans lequel les éléments de surface (26) sont agencés selon un agencement compact carré ou un agencement compact hexagonal.

7. Dispositif (10) selon une quelconque revendication précédente, dans lequel une ou les deux pales de rotor comprennent une partie plus plate (25A) se terminant au niveau d'un bord avant (27A) et une partie incurvée (25B) se terminant au niveau d'un bord de fuite (27B) et dans lequel les éléments de surface (26) s'étendent sur au moins une partie de la partie incurvée (C, 25B) de la surface externe d'une ou des deux pales (22A, 22B).

8. Dispositif (10) selon une quelconque revendication précédente, dans lequel les éléments de surface (26) s'étendent d'un coin inférieur (127) à un coin supérieur (227) de la partie incurvée (C, 25B) de la surface externe de l'une ou des deux pales (22A, 22B).

9. Dispositif (10) selon une quelconque revendication précédente, dans lequel au moins un élément de surface (26) est adjacent au bord de fuite (27B) d'une ou des deux pales (22A, 22B).

10. Dispositif (10) selon une quelconque revendication précédente, dans lequel une pluralité d'éléments de surface (26) est adjacente au bord de fuite (27B) d'une ou des deux pales (22A, 22B).

11. Dispositif (10) selon une quelconque revendication précédente, dans lequel une ou les deux pales de rotor présente(nt), un angle de dépouille.

12. Dispositif (10) selon une quelconque revendication précédente, dans lequel les éléments de surface sont des creux en retrait.

13. Dispositif (10) selon une quelconque revendication précédente, dans lequel les éléments de surface présentent une taille et/ou une configuration identique(s), ou très similaire(s).

14. Dispositif (10) selon une quelconque revendication précédente, dans lequel au moins certains des éléments de surface sont sensiblement circulaires ou ovales ou elliptiques ou oblongs ou hexagonaux ou octogonaux.
